(19) **Europäisches Patentamt / European Patent Office / Office européen des brevets**

(11) **EP 2 980 909 B1**

(12) **EUROPEAN PATENT SPECIFICATION**

(45) Date of publication and mention
of the grant of the patent:
**03.05.2017 Bulletin 2017/18**

(51) Int Cl.:
*H01M 2/18* (2006.01)    *H01M 4/13* (2010.01)
*H01M 4/62* (2006.01)    *H01M 10/052* (2010.01)
*H01M 10/058* (2010.01)

(21) Application number: **14773240.8**

(22) Date of filing: **26.03.2014**

(86) International application number:
**PCT/JP2014/058688**

(87) International publication number:
**WO 2014/157420 (02.10.2014 Gazette 2014/40)**

(54) **NON-AQUEOUS ELECTROLYTE SECONDARY BATTERY**

SEKUNDÄRBATTERIE MIT WASSERFREIEM ELEKTROLYT

BATTERIE SECONDAIRE À ÉLECTROLYTE NON AQUEUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.03.2013 JP 2013064945**

(43) Date of publication of application:
**03.02.2016 Bulletin 2016/05**

(73) Proprietors:
- **NISSAN MOTOR CO., LTD.
Yokohama-shi, Kanagawa 220-8623 (JP)**
- **Automotive Energy Supply Corporation
Zama-shi, Kanagawa 252-0012 (JP)**

(72) Inventors:
- **HAGIYAMA, Kousuke
Atsugi-shi
Kanagawa 243-0123 (JP)**
- **HONDA, Takashi
Atsugi-shi
Kanagawa 243-0123 (JP)**
- **YAMAGUCHI, Ryuuta
Atsugi-shi
Kanagawa 243-0123 (JP)**

- **MIYAMOTO, Takeshi
Atsugi-shi
Kanagawa 243-0123 (JP)**
- **MATSUZAKI, Ikuma
Atsugi-shi
Kanagawa 243-0123 (JP)**
- **MINEO, Norikazu
Atsugi-shi
Kanagawa 243-0123 (JP)**
- **MATSUMOTO, Keisuke
Zama-shi
Kanagawa 252-0012 (JP)**
- **SHIMAMURA, Osamu
Zama-shi
Kanagawa 252-0012 (JP)**

(74) Representative: **Grünecker Patent- und
Rechtsanwälte
PartG mbB
Leopoldstraße 4
80802 München (DE)**

(56) References cited:
**EP-A1- 2 980 910    JP-A- 2003 017 122
JP-A- 2010 113 804   JP-A- 2011 023 221
US-A1- 2010 062 332  US-A1- 2010 086 833**

**Description**

Technical Field

The present invention relates to a non-aqueous electrolyte secondary battery.

Background Art

In recent years, developments of electric vehicles (EV), hybrid electric vehicles (HEV) and fuel cell vehicles (FCV) have been advanced against the background of escalating environmental protection movement. For a power source for driving motors used on those vehicles, a rechargeable secondary battery is suitable. In particular, what is attracting the attention is a non-aqueous electrolyte secondary battery such as a lithium-ion secondary battery expected to provide high capacity and high output.

A non-aqueous electrolyte secondary battery is provided to have a positive electrode active material layer that is formed on a surface of a current collector and includes a positive electrode active material (for example, $LiCoO_2$, $LiMO_2$, or $LiNiO_2$). Additionally, the non-aqueous electrolyte secondary battery is provided to have a negative electrode active material layer that is formed on a surface of a current collector and includes a negative electrode active material (for example, metal lithium, carbonaceous materials such as cokes, natural and synthetic graphite, metal materials including Sn and Si and oxides of them).

A binder for binding an active material which is used for an active material layer is classified into an organic solvent-based binder (binder which is not dissolved/dispersed in water but dissolved/dispersed in an organic solvent) and an aqueous binder (a binder which is dissolved/dispersed in water). The organic solvent-based binder can be industrially disadvantageous due to high cost such as raw material cost for an organic solvent, recovery cost, and cost relating to waste processing. Meanwhile, the aqueous binder has an advantage of lowering a burden on environment and greatly suppressing an investment on facilities of a production line, since water as a raw material is conveniently available and only water vapor is generated during drying. The aqueous binder also has an advantage that, since the aqueous binder has a high binding effect even with a small amount compared to an organic solvent-based binder, it can increase a ratio of an active material per same volume so that a negative electrode with high capacity can be achieved.

From the viewpoint of having those advantages, various attempts have been made for forming a negative electrode by using an aqueous binder as a binder for forming an active material layer. For example, with regard to a technique of using sulfonated latex as a binder for a negative electrode active material layer, a technique of using a rubber-based binder such as styrene-butadiene rubber (SBR) as a sulfonated latex is disclosed in JP 2003-123765 A. According to JP 2003-123765 A, it is described that the charge characteristics of a battery at low temperature or charge and discharge cycle service life characteristics can be improved by having such constitution. JP 2011-023221 A discloses a lithium ion secondary battery with high capacity and excellent in cycle characteristics comprising a binder using acrylic modified resin containing repeating units derived from nitrile group containing monomers at a content of 80 mass% or more, and a specific type of carbon black as a conductive assistant.

Summary of Invention

However, according to the investigation of the inventors of the present invention, it was found that, in the non-aqueous electrolyte secondary battery in which an aqueous binder such as SBR was used for forming the negative electrode active material layer, battery performance (particularly, lifetime characteristics after long-term cycle) did not still reach a sufficient level. Here, when the aqueous binder was used, due to the fact that the aqueous binder was less likely to be swollen with respect to the electrolyte solution, the amount of the electrolyte solution, which was not absorbed by the binder and was present in the residual space inside the outer casing, was relatively large as compared to the injected amount of the same electrolyte solution. As a result, the inventors of the present invention found that the distance between the negative electrode active material layer and the positive electrode active material layer was pressed to be widened by an excessive electrolyte solution, thereby making the reaction for forming the film (SEI) on the surface of the negative electrode active material non-uniform.

In this regard, an object of the present invention is to provide a means for enabling a reaction for forming a film (SEI) on a surface of a negative electrode active material to proceed more uniformly in a case where an aqueous binder is used as a binder for a negative electrode active material layer in a non-aqueous electrolyte secondary battery.

The non-aqueous electrolyte secondary battery according to the present invention has a configuration in which a power generating element is enclosed inside an outer casing. The power generating element includes a positive electrode having a positive electrode active material layer formed on a surface of a positive electrode current collector, a negative electrode having a negative electrode active material layer formed on a surface of a negative electrode current collector, and a separator holding an electrolyte solution. Further, the negative electrode active material layer contains an aqueous binder. The ratio value ($V_2/V_1$) of a volume V; of a residual space inside the outer casing to a volume $V_1$ of pores of the power generating element is 0.4 to 0.5, and the ratio value ($L/V_2$) of a volume L of the electrolyte solution injected to the outer casing to the volume $V_2$ of the residual space inside the outer casing is 0.6 to 0.8.

Brief Description of Drawings

Fig. 1 is a cross-sectional view schematically illustrating the basic constitution of a non-aqueous electrolyte lithium ion secondary battery, which is a flat type (stack type) and not a bipolar type, of an embodiment of an electrical device.
Fig. 2 (A) is a plan view of a non-aqueous electrolyte secondary battery according to a preferred embodiment of the present invention.
Fig. 2(B) is a diagram viewed from the arrow A in Fig. 2(A). Description of Embodiments

The present invention is a non-aqueous electrolyte secondary battery having a power generating element enclosed inside an outer casing, and the power generating element includes a positive electrode having a positive electrode active material layer formed on a surface of a positive electrode current collector, a negative electrode having a negative electrode active material layer containing an aqueous binder formed on a surface of a negative electrode current collector, and a separator holding an electrolyte solution. The ratio value ($V_2/V_1$) of a volume $V_2$ of a residual space inside the outer casing to a volume $V_1$ of pores of the power generating element is 0.4 to 0.5, and the ratio value ($L/V_2$) of a volume L of the electrolyte solution injected to the outer casing to the volume $V_2$ of the residual space inside the outer casing is 0.6 to 0.8. In the non-aqueous electrolyte secondary battery according to the present invention, when the aqueous binder is used in the negative electrode active material layer, the balance between the amount of the electrolyte solution to be injected in the outer casing and the volume of the residual space of the outer casing is controlled in a particularly optimal range. As a result, even when the aqueous binder is used as a binder for the negative electrode active material layer, a state where an excessive electrolyte solution is present between the negative electrode active material layer and the positive electrode active material layer is not created and a distance between the active material layers is uniformly maintained. Consequently, a reaction for forming a film (SEI) on a surface of a negative electrode active material is enabled to proceed more uniformly and it is possible to provide a non-aqueous electrolyte secondary battery with excellent long-term cycle characteristics (lifetime characteristics).
As described above, an aqueous binder has various advantages since water can be used as a solvent in production of an active material layer, and also has high binding property for binding an active material. However, the inventors of the present invention found that when the aqueous binder was used in the negative electrode active material layer, battery performance (particularly, lifetime characteristics after long-term cycle) did not still reach a sufficient level. They made a hypothesis that the insufficient battery performance might be caused by non-uniform reaction for forming the film (SEI) on the surface of the negative electrode active material and then further investigated an underlying cause. As a result, they found that, as compared to a binder such as polyvinylidene fluoride (PVdF) which was widely used in the related art, non-uniform film formation reaction was caused by the fact that the aqueous binder was less likely to be swollen with respect to the electrolyte solution. That is, when the aqueous binder was used, since the aqueous binder was less likely to be swollen with respect to the electrolyte solution, the amount of the electrolyte solution, which was not absorbed by the binder and was present in the residual space inside the outer casing, was relatively large as compared to the injected amount of the same electrolyte solution. As a result, they found that the distance between the negative electrode active material layer and the positive electrode active material layer was pressed to be widened by an excessive electrolyte solution, thereby making the reaction for forming the film (SEI) on the surface of the negative electrode active material non-uniform.
In a stack type laminate battery of which the capacity per single cell is several to several tens of times larger than that of consumer use, the electrode is large-sized for improvement of the energy density, and thus the excessive amount of the electrolyte solution further increases as compared to the battery of consumer use. For this reason, non-uniform reaction on the surface of the negative electrode active material more easily occurs.
As results of earnest investigation based on the findings described above, the inventors of the present invention found that, when the ratio value ($V_2/V_1$) of a volume $V_2$ of a residual space inside the outer casing to a volume $V_1$ of pores of the power generating element was controlled in the range of 0.4 to 0.5 and the ratio value ($L/V_2$) of a volume L of the electrolyte solution injected to the outer casing to the volume $V_2$ of the residual space inside the outer casing was controlled in the range of 0.6 to 0.8, the occurrence of non-uniform reaction on the surface of the negative electrode active material as described above is suppressed, and they completed the present invention.
Next, a description will be made of a non-aqueous electrolyte lithium ion secondary battery as a preferred embodiment of the non-aqueous electrolyte secondary battery. Meanwhile, the same elements are given with the same symbols for the descriptions of the drawings, and overlapped descriptions are omitted. Further, note that dimensional ratios in the drawings are exaggerated for the description, and are different from actual ratios in some cases.

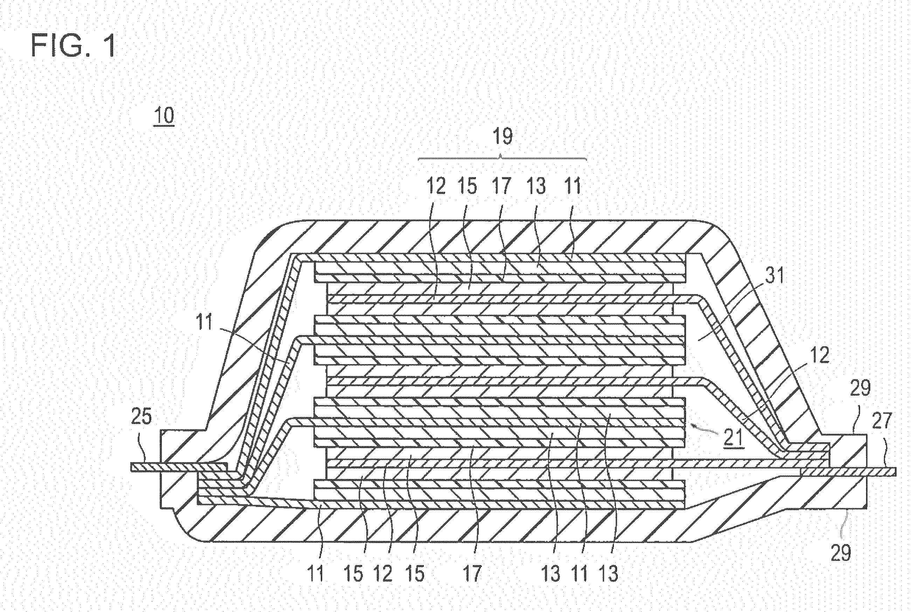

Fig. 1 is a cross-sectional view schematically illustrating the basic constitution of a non-aqueous electrolyte lithium ion secondary battery which is a flat type (stack type) and not a bipolar type (hereinbelow, it is also simply referred to as a "stack type battery"). As illustrated in Fig. 1, the stack type battery 10 according to this embodiment has a structure in which a power generating element 21 with a substantially rectangular shape, in which a charge and discharge reaction actually occurs, is sealed inside of a battery outer casing 29. Herein, the power generating element 21 has a constitution in which a positive electrode, the separator 17, and a negative electrode are stacked. Meanwhile, the separator 17 has a non-aqueous electrolyte (for example, liquid electrolyte) therein. The positive electrode has a structure in which the positive electrode active material layer 13 is disposed on both surfaces of the positive electrode current collector 11. The negative electrode has a structure in which the negative electrode active material layer 15 is disposed on both surfaces of the negative electrode current collector 12. Specifically, one positive electrode active material layer 13 and the neighboring negative electrode active material layer 15 are disposed to face each other via the separator 17, and the negative electrode, the electrolyte layer, and the positive electrode are stacked in this order. Accordingly, the neighboring positive electrode, electrolyte layer and negative electrode form one single battery layer 19. It can be also said that, as plural single barrier layers 19 are stacked, the stack type battery 10 illustrated in Fig. 1 has a constitution in which electrically parallel connection is made among them.

Meanwhile, on the outermost layer positive electrode current collector which is present on both outermost layers of the power generating element 21, the positive electrode active material layer 13 is disposed only on a single surface. However, an active material layer may be formed on both surfaces. Namely, not only a current collector exclusive for an outermost layer in which an active material layer is formed on a single surface can be achieved but also a current collector having an active material layer on both surfaces can be directly used as a current collector of an outermost layer. Furthermore, by reversing the arrangement of the positive electrode and negative electrode of Fig. 1, it is also possible that the outer most layer negative electrode current collector is disposed on both outermost layers of the power generating element 21 and a negative electrode active material layer is disposed on a single surface or both surfaces of the same outermost layer negative electrode current collector.

The positive electrode current collector 11 and negative electrode current collector 12 have a structure in which each of the positive electrode current collecting plate (tab) 25 and negative electrode current collecting plate (tab) 27, which conductively communicate with each electrode (positive electrode and negative electrode), is attached and inserted to the end part of the battery outer casing 29 so as to be led to the outside of the battery outer casing 29. If necessary, each of the positive electrode current collecting plate 25 and negative electrode current collecting plate 27 can be attached, via a positive electrode lead and negative electrode lead (not illustrated), to the positive electrode current collector 11 and negative electrode current collector 12 of each electrode by ultrasonic welding or resistance welding.

Meanwhile, although a stack type battery which is a flat type (stack type), not a bipolar type is illustrated in Fig. 1, it can be also a bipolar type battery containing a bipolar type electrode which has a positive electrode active material layer electrically bound to one surface of a current collector and a negative electrode active material layer electrically bound to the opposite surface of the current collector. In that case, one current collector plays both roles of a positive electrode current collector and a negative electrode current collector.

Hereinbelow, each member is described in more detail.

[Negative electrode active material layer]

The negative electrode active material layer contains a negative electrode active material. Examples of the negative electrode active material include a carbon material such as graphite (graphite), soft carbon, and hard carbon, a lithium-transition metals composite oxide (for example, $Li_4Ti_5O_{12}$), a metal material, and a lithium alloy-based negative electrode material. If necessary, two or more kinds of a negative electrode active material may be used in combination. Preferably, from the viewpoint of capacity and output characteristics, a carbon material or a lithium-transition metal composite oxide is used as a negative electrode active material. Meanwhile, it is needless to say that a negative electrode active material other than those described above can be also used.

The average particle size of each active material contained in the negative electrode active material layer is, although not particularly limited, preferably 1 to 100 $\mu$m, and more preferably 1 to 30 $\mu$m from the viewpoint of having high output.

The negative electrode active material layer includes at least an aqueous binder. Meanwhile, the aqueous binder has an advantage of lowering a burden on environment and greatly suppressing an investment on facilities of a production line, since water as a raw material is conveniently available and only water vapor is generated during drying.

The aqueous binder indicates a binder with which water is used as a solvent or a dispersion medium, and specific examples thereof include a thermoplastic resin, a polymer with rubber elasticity, a water soluble polymer, and a mixture thereof. Herein, the binder with which water is used as a dispersion medium includes all expressed as latex or an emulsion, and it indicates a polymer emulsified in water or suspended in water. Examples thereof include a polymer latex obtained by emulsion polymerization in a self-emulsifying system.

Specific examples of the aqueous binder include a styrene polymer (styrene-butadiene rubber, styrene-vinyl acetic acid copolymer, styrene-acryl copolymer or the like), acrylonitrile-butadiene rubber, methacrylic acid methyl-butadiene rubber, (meth)acrylic polymer (polyethylacrylate, polyethylmethacrylate, polypropylacrylate, polymethylmethacrylate (methacrylic acid methyl rubber), polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylmethacrylate, or the like), polytetrafluoroethylene, polyethylene, polypropylene, ethylene-propylene copolymer, polybutadiene, butyl rubber, fluororubber, polyethylene oxide, polyepichlorohydrin, polyphosphagen, polyacrylonitrile, polystyrene, ethylene-propylene-diene copolymer, polyvinylpyridine, chlorosulfonated polyethylene, a polyester resin, a phenol resin, an epoxy resin; polyvinyl alcohol (average polymerization degree is preferably 200 to 4,000, and more preferably 1,000 to 3,000, and saponification degree is preferably 80% by mol or more, and more preferably 90% by mol or more) and a modified product thereof (1 to 80% by mol saponified product in a vinyl acetate unit of a copolymer with ethylene/vinyl acetate = 2/98 to 30/70 (molar ratio), 1 to 50% by mol partially acetalized product of polyvinyl alcohol, or the like), starch, and a modified product (oxidized starch, phosphoric acid esterified starch, cationized starch, or the like), cellulose derivatives (carboxymethyl cellulose, methyl cellulose, hydroxypropyl cellulose, hydroxyethyl cellulose, and a salt thereof), polyvinylpyrrolidone, polyacrylic acid (salt), polyethylene gylcol, copolymer of (meth)acrylamide and/or (meth)acrylic acid salt [(meth)acrylamide polymer, (meth)acrylamide-(meth) acrylic acid salt copolymer, alkyl (meth) acrylic acid (carbon atom number of 1 to 4) ester- (meth) acrylic acid salt copolymer, or the like], styrene-maleic acid salt copolymer, mannich modified product of polyacrylamide, formalin condensation type resin (urea-formalin resin, melamin-formalin resin or the like), polyamidepolyamine or dialkylamine-epichlorohydrin copolymer, polyethyleneimine, casein, soybean protein, synthetic protein, and a water soluble polymer such as mannan galactan derivatives. The aqueous binder can be used either singly or in combination of two or more types.

From the viewpoint of a binding property, the aqueous binder preferably contains at least one rubber-based binder which is selected from the group consisting of styrene-butadiene rubber, acrylonitrile-butadiene rubber, methacrylic acid methyl-butadiene rubber, and methacrylic acid methyl rubber. Further, the aqueous binder preferably contains styrene-butadiene rubber from the viewpoint of having a good binding property.

When styrene-butadiene rubber is used as an aqueous binder, the aforementioned water soluble polymer is preferably used in combination from the viewpoint of improving the coating property. Examples of the water soluble polymer which is preferably used in combination with styrene-butadiene rubber include polyvinyl alcohol and a modified product thereof, starch and a modified product thereof, cellulose derivatives (carboxymethyl cellulose, methyl cellulose, hydroxyethyl cellulose, and a salt thereof), polyvinylpyrrolidone, polyacrylic acid (salt), and polyethylene glycol. Among them, styrene-butadiene rubber and carboxymethyl cellulose are preferably combined as a binder. The mass content ratio between the styrene-butadiene rubber and the water soluble polymer is not particularly limited, but styrene-butadiene rubber : water soluble polymer is preferably 1 : 0.3 to 0.7.

In a binder used for the negative electrode active material layer, the content of the aqueous binder is preferably 80 to 100% by mass, preferably 90 to 100% by mass, and preferably 100% by mass. As a binder other than the aqueous binder, a binder used for the positive electrode active material layer described below is exemplified.

The amount of the binder contained in the negative electrode active material layer is not particularly limited as long as it is an amount that allows binding of the active material, but is preferably 0.5 to 15% by mass, more preferably 1 to 10% by mass, and further preferably 2 to 4% by mass with respect to the active material layer. The aqueous binder has high binding force, and thus can form the active material layer with addition of a small amount as compared to the organic solvent-based binder. For this reason, the content of the aqueous binder in the active material layer is preferably 0.5 to 15% by mass, more preferably 1 to 10% by mass, and further preferably 2 to 4% by mass with respect to the active material layer.

If necessary, the negative electrode active material layer further contains other additives such as a conductive aid, an electrolyte (for example, polymer matrix, ion conductive polymer, and electrolyte solution), and lithium salt for enhancing ion conductivity.

The conductive aid means an additive which is blended in order to enhance the conductivity of the positive electrode active material layer or negative electrode active material layer. As the conductive aid, for example, there can be mentioned carbon black including acetylene black; graphite; and carbon materials such as carbon fiber. When the active material layer contains a conductive aid, an electron network is formed effectively in the inside of the active material layer, and it can contribute to improvement of the output characteristics of a battery.

Examples of the electrolyte salt (lithium salt) include $Li(C_2F_5SO_2)_2N$, $LiPF_6$, $LiBF_4$, $LiClO_4$, $LiAsF_6$, and $LiCF_3SO_3$.

Examples of the ion conductive polymer include polyethylene oxide (PEO)-based and polypropylene oxide (PPO)-based polymer.

A blending ratio of the components that are contained in the negative electrode active material layer and positive electrode active material layer described below is not particularly limited. The blending ratio can be adjusted by suitably referring the already-known knowledge about a lithium ion secondary battery. The thickness of each active material layer is not particularly limited either, and reference can be made to the already-known knowledge about a battery. For example, the thickness of each active material layer is about 2 to 100 $\mu$m.

In the present invention, the density of the negative electrode active material layer is preferably 1.4 to 1.6 g/cm$^3$. Herein, when an aqueous binder is used for the negative electrode active material layer, there is generally a problem of having a large amount of gas generated during initial charge of a battery, compared to a solvent-based binder such as PVdF which is frequently used in a related art. In this regard, when the density of a negative electrode active material layer is 1.6 g/cm$^3$ or less, the generated gas can be sufficiently released from the inside of a power generating element so that the long-term cycle characteristics can be further improved. In addition, when the density of a negative electrode active material layer is 1.4 g/cm$^3$ or more, the connectivity of an active material is ensured to fully maintain the electron conductivity, and as a result, the battery performance can be further enhanced. The density of the negative electrode active material layer is preferably 1.35 to 1.65 g/cm$^3$ and more preferably 1.42 to 1.53 g/cm$^3$ from the viewpoint that the effect of the present invention is further exhibited. Meanwhile, the density of the negative electrode active material layer means weight of an active material layer per unit volume. Specifically, after collecting the negative electrode active material layer from a battery and removing the solvent or the like which is present in the electrolyte liquid, the electrode volume is obtained from width, length, and height, weight of the active material layer is measured, and the weight is divided by volume to obtain the density.

Furthermore, in the present invention, it is preferable that the surface average center line roughness (Ra) on a separator-side surface of the negative electrode active material layer is 0.5 to 1.0 $\mu$m. When the negative electrode active material layer has average center line roughness (Ra) of 0.5 $\mu$m or more, the long-term cycle characteristics can be further improved. It is believed to be due to the reason that, when the surface roughness is 0.5 $\mu$m or more, the gas generated within the power generating element can be easily released to outside of the system. Furthermore, when the average center line roughness (Ra) of the negative electrode active material layer is 1.0 $\mu$m or less, the electron conductivity in a battery element can be obtained at sufficient level so that the battery characteristics can be further improved.

As described herein, the average center line roughness Ra is a value expressed in micrometer ($\mu$m) which is obtained by the following Formula 1 (JIS-B0601-1994), when only the reference length in the direction of average line is subtracted from a roughness curve, x axis is taken in the direction of the average line in the subtracted part, y axis is taken in the direction of vertical magnification, and the roughness curve is expressed as y = f(x).

$$[\text{Formula 1}]$$

$$Ra = \frac{1}{\ell} \int_0^\ell |f(x)| dx$$

Ra value can be measured by using a probe type or a non-contact type surface roughness measurement device that is widely used in general, based on the method described in JIS-B0601-1994 or the like. There is no limitation regarding a manufacturer or mode of the apparatus. For the determination in the present invention, Model No. DEKTAK3030 made by SLOAN was used, Ra was obtained based on the method prescribed in JIS-B0601. Although the method can be made by any one of the contact type (probe type using a diamond needle or the like) and non-contact type (non-contact detection using laser beam or the like), the measurement was made in the present invention according to the contact type method.

Furthermore, as it can be measured relatively easily, the surface roughness Ra defined in the present invention is measured at a stage in which an active material layer is formed on a current collector during the manufacturing process. However, the measurement can be made even after the completion of a battery, and as it gives almost the same result as that obtained during the production process, it is sufficient that the surface roughness after completion of the battery satisfies the above Ra range. In addition, the surface roughness of a negative electrode active material layer indicates the roughness on a separator side of the negative electrode active material layer.

The surface roughness of a negative electrode can be controlled to be within the aforementioned range by adjusting, for example, the press pressure for forming an active material layer while considering the shape and particle size of an active material which is included in the negative electrode active material layer, and blending amount of an active material or the like. The shape of the active material varies depending on the type or production method, or the like. The shape control can be made by crushing or the like. Examples of the shape include a spherical (powder) shape, a plate shape, a needle shape, a column shape, and a prism shape. Thus, considering the shape employed for an active material layer, various active materials can be combined to control the surface roughness.

[Positive electrode active material layer]

The positive electrode active material layer contains an active material, and if necessary, it further contains other additives such as a conductive aid, a binder, an electrolyte (for example, polymer matrix, ion conductive polymer, and electrolyte liquid), and lithium salt for enhancing ion conductivity.

The positive electrode active material layer contains a positive electrode active material. Examples of the positive electrode active material include a lithium-transition metal composite oxide, a lithium-transition metal phosphate compound, and a lithium-transition metal sulfate compound such as $LiMn_2O_4$, $LiCoO_2$, $LiNiO_2$, Li (Ni-Mn-Co)$O_2$, or a compound in which part of the transition metals is replaced with other element. Depending on the case, two or more kinds of a positive electrode active material can be used in combination. As a preferred example, a lithium-transition metal composite oxide is used as a positive electrode active material from the viewpoint of capacity and output characteristics. As a more preferred example, Li(Ni-Mn-Co)$O_2$ and a compound in which part of the transition metals is replaced with other element (hereinbelow, also simply referred to as the "NMC composite oxide") are used. The NMC composite oxide has a layered crystal structure in which a lithium atom layer and a transition metal (Mn, Ni, and Co are arranged with regularity) atom layer are alternately stacked via an oxygen atom layer, one Li atom is included per atom of transition metal M and extractable Li amount is twice the amount of spinel lithium manganese oxide, that is, as the supply power is two times higher, it can have high capacity.

As described above, the NMC composite oxide includes a composite oxide in which part of transition metal elements are replaced with other metal element. In that case, examples of other element include Ti, Zr, Nb, W, P, Al, Mg, V, Ca, Sr, Cr, Fe, B, Ga, In, Si, Mo, Y, Sn, V, Cu, Ag, and Zn. Preferably, it is Ti, Zr, Nb, W, P, Al, Mg, V, Ca, Sr, or Cr. More preferably, it is Ti, Zr, P, Al, Mg, or Cr. From the viewpoint of improving the cycle characteristics, it is even more preferably Ti, Zr, Al, Mg, or Cr.

By having high theoretical discharge capacity, the NMC composite oxide preferably has a composition represented by General Formula (1) : $Li_aNi_bMn_cCO_dM_xO_2$ (with the proviso that, in the formula, a, b, c, d, and x satisfy $0.9 \leq a \leq 1.2$, $0 < b < 1$, $0 < c \leq 0.5$, $0 < d \leq 0.5$, $0 \leq x \leq 0.3$, and $b + c + d = 1$. M represents at least one element selected from Ti, Zr, Nb, W, P, Al, Mg, V, Ca, Sr, and Cr). Herein, a represents the atomic ratio of Li, b represents the atomic ratio of Ni, c represents the atomic ratio of Mn, d represents the atomic ratio of Co, and x represents the atomic ratio of M. From the viewpoint of the cycle characteristics, it is preferable that $0.4 \leq b \leq 0.6$ in General Formula (1). Meanwhile, composition of each element can be measured by induction coupled plasma (ICP) spectroscopy.

In general, from the viewpoint of improving purity and improving electron conductivity of a material, nickel (Ni), cobalt (Co) and manganese (Mn) are known to contribute to capacity and output characteristics. Ti or the like replaces part of transition metal in a crystal lattice. From the viewpoint of the cycle characteristics, it is preferable that part of transition element are replaced by other metal element, and it is preferable that $0 < x \leq 0.3$ in General Formula (1), in particular. By dissolving at least one selected from the group consisting of Ti, Zr, Nb, W, P, Al, Mg, V, Ca, Sr and Cr, the crystal structure is stabilized so that a decrease in capacity of a battery is prevented even after repeated charge and discharge, and thus, it is believed that excellent cycle characteristics can be achieved.

As a more preferred embodiment, b, c, and d in General Formula (1) satisfy $0.44 \leq b \leq 0.51$, $0.27 \leq c \leq 0.31$, and $0.19 \leq d \leq 0.26$ from the viewpoint of improving the balance between the capacity and the life-time property.

Meanwhile, it is needless to say that a positive electrode active material other than those described above can be also used.

The average particle size of each active material which is contained in the positive electrode active material layer is, although not particularly limited, preferably 1 to 100 $\mu$m, and more preferably 1 to 20 $\mu$m from the viewpoint of having high output.

A binder used for the positive electrode active material layer is not particularly limited and the following materials can be mentioned; thermoplastic polymers such as polyethylene, polypropylene, polyethylene terephthalate (PET), polyether nitrile, polyacrylonitrile, polyimide, polyamide, cellulose, carboxymethyl cellulose (CMC) and a salt thereof, an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, and a styrene-isoprene-styrene block copolymer and a hydrogenated product thereof, fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TEF-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFT-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene fluorine-based fluorine rubber (VDF-CTFE-based fluorine rubber), an epoxy resin, and the like. These binders may be each used singly, or two or more thereof may be used in combination.

The amount of the binder contained in the positive electrode active material layer is not particularly limited as long as it is an amount that allows binding of the active material, but is preferably 0.5 to 15% by mass and more preferably 1 to 10% by mass with respect to the active material layer.

With regard to other additives other than the binder, those described for the above negative electrode active material layer can be also used.


[Separator (Electrolyte Layer)]

A separator has an activity of maintaining an electrolyte to ensure lithium ion conductivity between a positive electrode and a negative electrode and also a function of a partition wall between a positive electrode and negative electrode.

Herein, in order to improve further the property of releasing the gas generated during initial charge of battery from the power generating element, it is also preferable to consider the property of releasing the gas which reaches the separator after discharged from the negative electrode active material layer. From this point of view, it is more preferable that the air permeability and porosity of the separator is adjusted to a suitable range.

Specifically, the air permeability (Gurley value) of the separator is preferably 200 (second/100cc) or less. As the air permeability (Gurley value) of the separator is preferably 200 (second/100cc) or less, the release of the generated gas is improved so that the battery can have good capacity retention rate after cycles and can have sufficient short-circuit preventing property and also sufficient mechanical properties as a function of the separator. Although the lower limit of the air permeability is not particularly limited, it is generally 300 (second/100cc) or more. The air permeability of the separator is a value measured by the method of JIS P8117 (2009).

Furthermore, it is preferable that the porosity of the separator is 40 to 65%. As the porosity of the separator is 40 to 65%, the releasing property of the generated gas is improved so that the battery can have good long-term cycle characteristics and can have sufficient short-circuit preventing property and also sufficient mechanical properties as a function of the separator. Meanwhile, as for the porosity, a value obtained as a volume ratio from the density of a raw material resin of a separator and the density of a separator as a final product is used. For example, when the density of a raw material resin is $\rho$ and volume density of a separator is $\rho'$, it is described as follows: porosity = 100 x $(1-\rho'/\rho)$.

Examples of a separator shape include a porous sheet separator or a non-woven separator composed of a polymer or a fiber which absorbs and maintains the electrolyte.

As a porous sheet separator composed of a polymer or a fiber, a microporous (microporous membrane) separator can be used, for example. Specific examples of the porous sheet composed of a polymer or a fiber include a microporous (microporous membrane) separator which is composed of polyolefin such as polyethylene (PE) and polypropylene (PP); a laminate in which plural of them are laminated (for example, a laminate with three-layer structure of PP/PE/PP), and a hydrocarbon based resin such as polyimide, aramid, or polyfluorovinylydene-hexafluoropropylene (PVdF-HFP), or glass fiber.

The thickness of the microporous (microporous membrane) separator cannot be uniformly defined as it varies depending on use of application. For example, for an application in a secondary battery for operating a motor of an electric vehicle (EV), a hybrid electric vehicle (HEV), and a fuel cell vehicle (FCV), it is preferably 4 to 60 $\mu$m as a monolayer or a multilayer. Fine pore diameter of the microporous (microporous membrane) separator is preferably 1 $\mu$m or less at most (in general, the pore diameter is about several tens of nanometer).

As a non-woven separator, conventionally known ones such as cotton, rayon, acetate, nylon, polyester; polyolefin such as PP and PE; polyimide and aramid are used either singly or as a mixture. Furthermore, the volume density of a non-woven fabric is not particularly limited as long as sufficient battery characteristics are obtained with an impregnated polymer gel electrolyte.

The porosity of a separator composed of non-woven fabric is 50 to 90%. Furthermore, the thickness of a separator composed of non-woven fabric can be the same as the thickness of an electrolyte layer, and it is preferably 5 to 200 $\mu$m and particularly preferably 10 to 100 $\mu$m.

Herein, the separator can be a separator having a heat resistant insulating layer laminated on at least one surface of a porous resin substrate. The heat resistant insulating layer is a ceramic layer containing inorganic particles and a binder. By having a heat resistant insulating layer, internal stress in a separator which increases under temperature increase is alleviated so that the effect of inhibiting thermal shrinkage can be obtained. Furthermore, by having a heat resistant insulating layer, mechanical strength of a separator having a heat resistant insulating layer is improved so that the separator hardly has a film breaking. Furthermore, because of the effect of inhibiting thermal shrinkage and a high level of mechanical strength, the separator is hardly curled during the process of fabricating an electric device. Furthermore, the ceramic layer can also function as a means for releasing gas to improve the property of releasing the gas from the power generating element, and therefor desirable.

As described above, the separator also contains an electrolyte. The electrolyte is not particularly limited as long as it can exhibit those functions, and a liquid electrolyte or a gel polymer electrolyte is used.

The liquid electrolyte has an activity of a lithium ion carrier. The liquid electrolyte has the form in which lithium salt is dissolved in an organic solvent. Examples of the organic solvent which can be used include carbonates such as ethylene carbonate (EC), propylene carbonate (PC), dimethyl carbonate (DMC), diethyl carbonate (DEC), and ethylmethyl carbonate. Furthermore, as a lithium salt, the compound which can be added to an active material layer of an electrode such as $Li(CF_3SO_2)_2N$, $Li(C_2F_5SO_2)_2N$, $LiPF_6$, $LiBF_4$, $LiClO_4$, $LiAsF_6$, $LiTaF_6$, and $LiCF_3SO_3$ can be similarly used. The liquid electrolyte may further contain an additive in addition to the components that are described above. Specific examples of the compound include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methylene ethylene carbonate, and 1,1-dimethyl-2-methyleneethylene carbonate. Among them, vinylene carbonate, methylvinylene carbonate, and vinylethylene carbonate are preferable. Vinylene carbonate and vinylethylene carbonate are more preferable. Those cyclic carbonate esters may be used either singly or in combination of two or more types.

The gel polymer electrolyte has a constitution that the aforementioned liquid electrolyte is injected to a matrix polymer (host polymer) consisting of an ion conductive polymer. Using a gel polymer electrolyte as an electrolyte is excellent in that the fluidity of an electrolyte disappears and ion conductivity between each layer is blocked. Examples of an ion conductive polymer which is used as a matrix polymer (host polymer) include polyethylene oxide (PEO), polypropylene oxide (PPO), and a copolymer thereof. An electrolyte salt such as lithium salt can be dissolved well in those polyalkylene oxide polymers.

According to forming of a cross-linked structure, the matrix polymer of a gel electrolyte can exhibit excellent mechanical strength. For forming a cross-linked structure, it is sufficient to perform a polymerization treatment of a polymerizable polymer for forming a polymer electrolyte (for example, PEO and PPO), such as thermal polymerization, UV polymerization, radiation polymerization, and electron beam polymerization, by using a suitable polymerization initiator.

[Current collector]

The material for forming a current collector is not particularly limited, but metal is preferably used.

Specific examples of the metal include aluminum, nickel, iron, stainless, titan, copper, and other alloys. In addition to them, a clad material of a nickel and aluminum, a clad material of copper and aluminum, or a plating material of a combination of those metals can be preferably used. It can be also a foil obtained by coating aluminum on a metal surface. Among them, from the viewpoint of electron conductivity or potential for operating a battery, aluminum, stainless, and copper are preferable.

The size of the current collector is determined based on use of a battery. When it is used for a large-size battery which requires high energy density, for example, a current collector with large area is used. The thickness of the current collector is not particularly limited, either. The thickness of the current collector is generally about 1 to 100 μm.

[Positive electrode current collecting plate and negative electrode current collecting plate]

The material for forming the current collecting plate (25, 27) is not particularly limited, and a known highly conductive material which has been conventionally used for a current collecting plate for a lithium ion secondary battery can be used. Preferred examples of the material for forming a current collecting plate include metal material such as aluminum, copper, titanium, nickel, stainless steel (SUS) and an alloy thereof. From the viewpoint of light weightiness, resistance to corrosion, and high conductivity, aluminum and copper are preferable. Aluminum is particularly preferable. Meanwhile, the same material or a different material can be used for the positive electrode current collecting plate 25 and the negative electrode current collecting plate 27.

[Positive electrode lead and negative electrode lead]

Further, although it is not illustrated, the current collector 11 and the current collecting plate (25, 27) can be electrically connected to each other via a positive electrode lead or a negative electrode lead. The same material used for a lithium ion secondary battery of a related art can be also used as a material for forming a positive electrode lead and a negative electrode lead. Meanwhile, a portion led out from a casing is preferably coated with a heat resistant and insulating thermally shrunken tube or the like so that it has no influence on a product (for example, an automobile component, in particular, an electronic device or the like) by electric leak after contact with neighboring instruments or wirings.

[Battery outer casing]

As for the battery outer casing 29, an envelope-shaped casing to cover a power generating element, in which a laminate film including aluminum is contained, can be used as a member for enclosing a power generating element within it. As for the laminate film, a laminate film with a three-layer structure formed by laminating PP, aluminum and nylon in order can be used, but not limited thereto. From the viewpoint of having high output and excellent cooling performance, and of being suitably usable for a battery for a large instrument such as EV or HEV, a laminate film is preferable. Furthermore, as the group pressure applied from outside to a power generating element can be easily controlled, a laminate film containing aluminum for an outer casing is more preferred.

The internal volume of the battery outer casing 29 is designed to be larger than the volume of the power generating element 21 such that it can enclose the power generating element 21. Herein, the internal volume of an outer casing indicates the volume inside an outer casing before performing a vacuum treatment after sealing the outer casing. Furthermore, the volume of the power generating element means the volume which is spatially taken by the power generating element, and it include the pore part in the power generating element. As the internal volume of an outer casing is larger than the volume of the power generating element, a space for collecting gas at the time of gas generation can be present. Accordingly, the gas release property from the power generating element is enhanced and it is less likely that the battery behavior is affected by the generated gas, and therefore the battery characteristics are improved.

Further, in this embodiment, it is configured that the ratio value $(V_2/V_1)$ of the volume $V_2$ of the residual space (the reference numeral 31 illustrated in Fig. 1) inside the battery outer casing 29 to the volume $V_1$ of pores of the power generating element 21 is 0.4 to 0.5, and the ratio value $(L/V_2)$ of the volume L of the electrolyte solution injected to the outer casing to the volume $V_2$ of the residual space inside the outer casing is 0.6 to 0.8. According to this, a part, which is not absorbed by the binder, of the electrolyte solution injected to the inside of the outer casing can be reliably maintained in the residual space. In addition, the migration of lithium ions in the battery can also be reliably ensured. As a result, it is possible to prevent the occurrence of non-uniform reaction according to the widening of the distance between electrode plates caused by the presence of an excessive electrolyte solution which may be a problem occurring in the case of using a large amount of an electrolyte solution, similarly to the case of using a solvent-based binder such as PVdF. Therefore, it is possible to provide a non-aqueous electrolyte secondary battery with excellent long-term cycle characteristics (lifetime characteristics).

Herein, the "pore volume in the power generating element" can be calculated as total of pores that are present in each member constituting the power generating element. Furthermore, the battery can be manufactured by injecting an electrolyte liquid after enclosing power generating element in an outer casing and then sealing it with creating vacuum inside the outer casing. When gas is generated from the inside of an outer casing in this state, if there is a space for holding the generated gas inside an outer casing, the generated gas is concentrated in that space, yielding a swollen outer casing. In the specification, this space is defined as an "extra space", and the volume of an extra space when the outer casing is swollen at maximum level without burst is defined as $V_2$. As described above, the value of $V_2/V_1$ is essentially 0.4 to 0.5, and preferably 0.42 to 0.47.

Furthermore, as described above, the value between the volume of injected electrolyte liquid and the volume of the aforementioned extra surface is controlled within a pre-determined range in the present invention. Specifically, the ratio $(L/V_2)$ value which is the ratio of the volume L of the electrolyte liquid injected to an outer casing relative to the volume $V_2$ of an extra space inside the outer casing is controlled to 0.6 to 0.8. $L/V_2$ value is preferably 0.65 to 0.75.

Meanwhile, as a preferred embodiment of the present invention, it is preferable that the aforementioned extra space which is present inside the outer casing is disposed at least vertically above the power generating element. By having this constitution, the generated gas can be concentrated at a site vertically above the power generating element in which an extra space is present. Accordingly, compared to a case in which an extra space is present in a lateral part or a bottom part of the power generating element, the electrolyte liquid can be firstly present in a bottom part in which the power generating element is present inside the outer casing. As a result, a state in which the power generating element is constantly soaked in as large amount of electrolyte liquid as possible can be obtained, and thus lowered battery performance accompanied with liquid depletion can be suppressed to a minimum level. Meanwhile, although there is no specific limitation on the constitution to have an extra space present vertically above the power generating element, for example, it is possible that the material or shape of an outer casing itself is constituted such that no swelling occurs toward the lateral part or bottom part of the power generating element, or a member for preventing the swelling of an outer casing toward the lateral part or bottom part can be disposed on the outside of an outer casing.

A large-size battery is required recently for use in an automobile and the like. In addition, the effect of the invention, that is, the prevention of non-uniform formation of a film (SEI) on the surface of the negative electrode active material, can be more effectively exhibited in a large-area battery having a large amount of the film (SEI) formed on the surface of the negative electrode active material. Thus, in the present invention, a battery structure having a power generating element covered with an outer casing preferably has large size from the viewpoint of better exhibition of the effect of the present invention. Specifically, it is preferable that the negative electrode active material layer has a rectangular shape in which the short side length is 100 mm or more. Such battery with large size can be used for an application in automobile. Herein, the short side length of a negative electrode active material layer indicates the length of the shortest side in each electrode. Herein, the upper limit of a length of a short side is, although not particularly limited, generally 250 mm or less.

It is also possible to determine the large size of a battery in view of a relationship between battery area or battery capacity, from the viewpoint of a large-size battery, which is different from a physical size of an electrode. For example, in the case of a flat and stack type laminate battery, the ratio value of a battery area (projected area of a battery including an outer casing of the battery) to rated capacity is 5 $cm^2$/Ah or more, and for a battery with rated capacity of 3 Ah or more, the battery area per unit capacity is large so that non-uniform formation of a film (SEI) on the surface of the negative electrode active material is readily promoted. For such reasons, a problem of having lowered battery characteristics (in particular, service life characteristics after long-term cycle) may become more significant for a large-size battery in which an aqueous binder such as SBR is used for forming a negative electrode active material layer. The non-aqueous electrolyte secondary battery according to this embodiment is preferably a large-size battery as described above from the viewpoint of having a larger merit by exhibition of the working effects of the present invention. Furthermore, the aspect ratio of a rectangular electrode is preferably 1 to 3, and more preferably 1 to 2. Meanwhile, the aspect ratio of an electrode is defined by a horizontal to vertical ratio of the positive electrode active material layer with a rectangular shape. By having the aspect ratio in this range, an advantage of further suppressing an occurrence of uneven film can be obtained according to the present invention in which use of an aqueous binder is essential, as the gas can be evenly released in plane direction.

[Group pressure applied on power generating element]

In the present embodiment, the group pressure applied on the power generating element is preferably 0.07 to 0.7 kgf/$cm^2$ (6.86 to 68.6 kPa). By applying pressure to a power generating element to have the group pressure of 0.07 to 0.7 kgf/$cm^2$, uneven increase in distance between electrode plates can be prevented and it is also possible to ensure sufficient movement of lithium ions between electrode plates. In addition, the gas which is generated according to the battery reaction can be released better to an outside of the system, and also as extra electrolyte liquid in the battery does not much remain between the electrodes, and thus an increase in cell resistance can be suppressed. In addition, as the battery swelling is suppressed, good cell resistance and capacity retention rate after long-term cycle are obtained. More preferably, the group pressure applied to the power generating element is 0.1 to 0.7 kgf/$cm^2$ (9.80 to 68.6 kPa). Herein, the group pressure indicates an external force applied to a power generating element. The group pressure applied to a power generating element can be easily measured by using a film type pressure distribution measurement system. In the present specification, the value measured by using the film type pressure distribution measurement system manufactured by Tekscan is used.

Although it is not particularly limited, control of the groupe pressure can be made by applying directly or indirectly external force to a power generating element by physical means, and controlling the external force. As for the method for applying external force, it is preferable to use a pressure member which can apply pressure on an outer casing. Namely, one preferred embodiment of the present invention is a non-aqueous electrolyte secondary battery which further has a pressure member for applying pressure on an outer casing such that the group pressure applied on the power generating element is 0.07 to 0.7 kgf/$cm^2$.

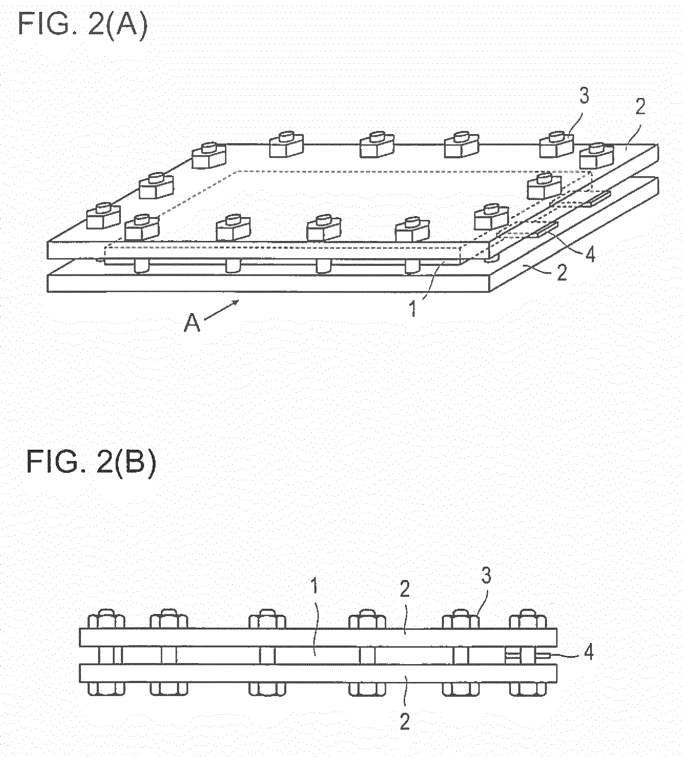

Fig. 2 (A) is a plan view of a non-aqueous electrolyte lithium ion secondary battery as another preferred embodiment of the present invention and Fig. 2 (B) is a diagram seen from the arrow direction of A in Fig. 2 (A). The outer casing 1 with enclosed power generating element has a flat rectangular shape, and the electrode tab 4 is drawn from the lateral side of the outer casing for extracting electric power. The power generating element is covered by the battery outer casing with its periphery fused by heat. The power generating element is sealed in a state in which the electrode tab is led to the outside. Herein, the power generating element corresponds to the power generating element 21 of the lithium ion secondary battery 10 illustrated in Fig. 1 as described above. In Figs. 2A and 2B, 2 represents a SUS plate as a pressure member, 3 represents a fixing jig as a fixing member, and 4 represents an electrode tab (negative electrode tab or positive electrode tab). The pressure member is disposed for the purpose of controlling the group pressure applied to power generating element to 0.07 to 0.7 kgf/$cm^2$. Examples of the pressure member include a rubber material such as urethane rubber sheet, a metal plate such as aluminum and SUS, and a resin material containing polyethylene or polypropylene. Furthermore, from the viewpoint of having continuous application of constant pressure on a power generating element by a pressure member, it is preferable to have a fixing means for fixing a pressure member with spring property. Furthermore, by controlling the fixing of a fixing jig onto a pressure member, the group pressure applied to a power generating element can be easily controlled.

Meanwhile, drawing of the tab illustrated in Figs. 2A and 2B is not particularly limited, either. The positive electrode tab and the negative electrode tab may be drawn from two lateral sides, or each of the positive electrode tab and negative electrode tab may be divided into plural tabs and drawn from each side.

[Assembled battery]

An assembled battery is formed by connecting plural batteries. Specifically, at least two of them are used in series, in parallel, or in series and parallel. According to arrangement in series or parallel, it becomes possible to freely control the capacity and voltage.

It is also possible to form a detachable small-size assembled battery by connecting plural batteries in series or in parallel. Furthermore, by connecting again plural detachable small-size assembled batteries in series or parallel, an assembled battery having high capacity and high output, which is suitable for a power source for operating a vehicle requiring high volume energy density and high volume output density or an auxiliary power source, can be formed. The number of the connected batteries for fabricating an assembled battery or the number of the stacks of a small-size assembled battery for fabricating an assembled battery with high capacity can be determined depending on the capacity or output of a battery of a vehicle (electric vehicle) for which the battery is loaded.

[Vehicle]

The electric device has excellent output characteristics and can maintain discharge capacity even when it is used for a long period of time, and thus has good cycle characteristics. For use in a vehicle such as an electric vehicle, a hybrid electric vehicle, a fuel cell electric vehicle, or a hybrid fuel cell electric vehicle, long service life is required as well as high capacity and large size compared to use for an electric and mobile electronic device. The electric device can be preferably used as a power source for a vehicle, for example, as a power source for operating a vehicle or as an auxiliary power source.

Specifically, the battery or an assembled battery formed by combining plural batteries can be mounted on a vehicle. According to the present invention, a battery with excellent long term reliability, output characteristics, and long service life can be formed, and thus, by mounting this battery, a plug-in hybrid electric vehicle with long EV driving distance and an electric vehicle with long driving distance per charge can be achieved. That is because, when the battery or an assembled battery formed by combining plural batteries is used for, for example, a vehicle such as hybrid car, fuel cell electric car, and electric car (including two-wheel vehicle (motor bike) or three-wheel vehicle in addition to all four-wheel vehicles (automobile, truck, commercial vehicle such as bus, compact car, or the like)), a vehicle with long service life and high reliability can be provided. However, the use is not limited to a vehicle, and it can be applied to various power sources of other transportation means, for example, a moving object such as an electric train, and it can be also used as a power source for loading such as an uninterruptable power source device.

Examples

A description is made below in more detail in view of examples and comparative examples.

(Example 1)

1. Production of electrolyte solution

A mixed solvent of ethylene carbonate (EC), ethyl methyl carbonate (EMC), and diethyl carbonate (DEC) (30 : 30 : 40 (volume ratio)) was used as the solvent. In addition, 1.0 M of $LiPF_6$ was used as the lithium salt. Further, 2% by mass of vinylene carbonate was added to the total 100% by mass of the solvent and the lithium salt to produce an electrolyte solution. Incidentally, "1.0 M of $LiPF_6$" means 1.0 M concentration of the lithium salt ($LiPF_6$) in a mixture of the mixed solvent and the lithium salt.

2. Production of positive electrode

A solid consisting of 85% by mass of $LiMn_2O_4$ (average particle diameter: 15 $\mu$m) as a positive electrode active material, 5% by mass of acetylene black as a conductive aid, and 10% by mass of PVdF as a binder was prepared. To this solid, N-methyl-2-pyrrolidone (NMP), which is a solvent for adjusting the slurry viscosity, was added in a suitable amount, to produce a positive electrode slurry. Next, the positive electrode slurry was coated on both surfaces of an aluminum foil (20 $\mu$m) as a current collector, and subjected to drying and pressing, to produce a positive electrode having

18 mg/cm$^2$ of the coating amount on a single surface and 157 $\mu$m of both surface thickness (including the foil) of the positive electrode active material layer. In addition, the density of the positive electrode active material layer was 2.95 g/cm$^3$.

3. Production of negative electrode

A solid consisting of 95% by mass of artificial graphite (average particle diameter: 20 $\mu$m) as a negative electrode active material, 2% by mass of acetylene black as a conductive aid, and 2% by mass of SBR and 1 mass% CMC as a binder was prepared. To this solid, ion exchanged water, which is a solvent for adjusting the slurry viscosity, was added in a suitable amount, to produce a negative electrode slurry. Next, the negative electrode slurry was coated on both surfaces of an copper foil (15 $\mu$m) as a current collector, and subjected to drying and pressing, to produce a negative electrode having 5.1 mg/cm$^2$ of the coating amount on a single surface and 82 $\mu$m of the thickness (including the foil) of the negative electrode active material layer. In addition, the density of the negative electrode active material layer was 1.48 g/cm$^3$.

4. Completion process of single battery

The positive electrode produced as described above was cut to a rectangular shape of 187 x 97 mm, and the negative electrode was cut to a rectangular shape of 191 x 101 mm (15 pieces of the positive electrode layer and 16 pieces of the negative electrode layer). These positive electrodes and negative electrodes were alternately laminated with a separator of 195 x 103 mm (polyolefin microporous membrane, 25 $\mu$m thickness) interposed therebetween. The rated capacity of the battery produced in this way was 6.9 Ah and the ratio of the battery area to the rated capacity was 39.1 cm$^2$/Ah. Incidentally, the rated capacity of the battery (single battery) was obtained as described below.

An electrolyte solution is injected to a battery for test, then left to stand for about 10 hours, and is subjected to the initial charge. Thereafter, the rated capacity is measured by the following Procedures 1 to 5 at a temperature of 25°C and in a voltage range of 3.0 V to 4.15 V.

Procedure 1: After the voltage reaches 4.15 V at constant current charge of 0.2 C, the charge of the battery is stopped for 5 minutes.

Procedure 2: After Procedure 1, the battery is charged for 1.5 hours at constant voltage charge, and the charge of the battery is stopped for 5 minutes.

Procedure 3 : After the voltage reaches 3.0 V by constant current discharge of 0.2 C, the battery is discharged for 2 hours at constant voltage discharge, and then the discharge of the battery is stopped for 10 seconds.

Procedure 4 : After the voltage reaches 4.1 V by constant current charge of 0.2 C, the battery is charged for 2.5 hours at constant voltage charge, and then the charge of the battery is stopped for 10 seconds.

Procedure 5 : After the voltage reaches 3.0 V by constant current discharge of 0.2 C, the battery is discharged for 2 hours at constant voltage discharge, and then the discharge of the battery is stopped for 10 seconds.

Rated capacity: The discharge capacity in the discharge from the constant current discharge to the constant voltage discharge (CCCV discharge capacity) in Procedure 5 is designated as the rated capacity.

These positive electrode and negative electrode were welded with a tab, respectively, and sealed together with an electrolyte solution into an outer casing made of an aluminum laminate film to complete a battery. The battery was interposed between a urethane rubber sheet (3 mm thickness) having an area larger than the area of the electrode and an Al plate (5 mm thickness), and was pressurized such that the group pressure became 0.5 kgf/cm$^2$, thereby completing a single battery. Incidentally, the volume ($V_1$) of pores of the power generating element produced in this way was calculated, and as a result of the calculation, the volume ($V_1$) was 20.0 cm$^3$.

(Examples 2 and 3 and Comparative Examples 1 to 3)

Batteries were produced in the same manner as in the Example 1, except that the amount (L) of the electrolyte solution to be injected to the inside of the outer casing, the ratio value ($V_2/V_1$) of the volume $V_2$ of the residual space inside the outer casing to the $V_1$, and the ratio value ($L/V_2$) of the L to the $V_2$ were changed to values presented in the following Table 1. Incidentally, the value of volume $V_2$ of the residual space was controlled by adjusting the internal volume of the outer casing.

(Examples 4 to 6)

The positive electrode produced as described above was cut to a rectangular shape of 150 x 78 mm, and the negative electrode was cut to a rectangular shape of 153 x 81 mm (15 pieces of the positive electrode layer and 16 pieces of the negative electrode layer). A power generating element was produced in the same manner as in the Example 1, except that these positive electrodes and negative electrodes were alternately laminated with a separator of 156 x 82 mm (the same polyolefin microporous membrane as described above) interposed therebetween. The rated capacity of the battery produced in this way was 4.4 Ah and the ratio of the battery area to the rated capacity was 42.6 cm$^2$/Ah. In addition, the volume ($V_1$) of pores of the power generating element produced in this way was measured in the same manner as described above, and as a result, the volume ($V_1$) was 16.0 cm$^3$.

Further, a battery was produced in such a manner that the amount (L) of the electrolyte solution to be injected to the inside of the outer casing, the ratio value ($V_2/V_1$) of the volume $V_2$ of the residual space inside the outer casing to the volume $V_1$, and the ratio value ($L/V_2$) of the L to the $V_2$ were set to values presented in the following Table 1.

(Examples 7 to 9)

The positive electrode produced as described above was cut to a rectangular shape of 234 x 121 mm, and the negative electrode was cut to a rectangular shape of 239 x 126 mm (15 pieces of the positive electrode layer and 16 pieces of the negative electrode layer). A power generating element was produced in the same manner as in the Example 1, except that these positive electrodes and negative electrodes were alternately laminated with a separator of 244 x 129 mm (the same polyolefin microporous membrane as described above) interposed therebetween. The rated capacity of the battery produced in this way was 18.8 Ah and the ratio of the battery area to the rated capacity was 33.8 cm$^2$/Ah. In addition, the volume ($V_1$) of pores of the power generating element produced in this way was measured in the same manner as described above, and as a result, the volume ($V_1$) was 25.0 cm$^3$.

Further, a battery was produced in such a manner that the amount (L) of the electrolyte solution to be injected to the inside of the outer casing, the ratio value ($V_2/V_1$) of the volume $V_2$ of the residual space inside the outer casing to the $V_1$, and the ratio value ($L/V_2$) of the L to the $V_2$ were set to values presented in the following Table 1.

(Examples 10 to 12)

The positive electrode produced as described above was cut to a rectangular shape of 215 x 112 mm, and the negative electrode was cut to a rectangular shape of 220 x 116 mm (15 pieces of the positive electrode layer and 16 pieces of the negative electrode layer). A power generating element was produced in the same manner as in the Example 1, except that these positive electrodes and negative electrodes were alternately laminated with a separator of 224 x 118 mm (the same polyolefin microporous membrane as described above) interposed therebetween. The rated capacity of the battery produced in this way was 9.1 Ah and the ratio of the battery area to the rated capacity was 37.3 cm$^2$/Ah. In addition, the volume ($V_1$) of pores of the power generating element produced in this way was measured in the same manner as described above, and as a result, the volume ($V_1$) was 23.0 cm$^3$.

Further, a battery was produced in such a manner that the amount (L) of the electrolyte solution to be injected to the inside of the outer casing, the ratio value ($V_2/V_1$) of the volume $V_2$ of the residual space inside the outer casing to the $V_1$, and the ratio value ($L/V_2$) of the L to the $V_2$ were set to values presented in the following Table 1.

(Evaluation of battery)

1. First time charge process of single battery

The non-aqueous electrolyte secondary battery (single battery) produced as described above was evaluated by charge and discharge performance test. In this charge and discharge performance test, the battery was maintained for 24 hours in an incubator maintained at 25°C, and first time charge was carried out. As the first time charge, the battery was subjected to constant current charge (CC) until 4.2 V at the current value of 0.05 CA, and then charged for 25 hours in total with constant voltage (CV). Thereafter, the battery was maintained for 96 hours in an incubator maintained at 40°C. Then, in an incubator maintained at 25°C, discharge was performed until 2.5 V at the current rate of 1 C, and then 10 minutes of the resting time was provided.

2. Evaluation of battery

Subsequently, the battery was set to 45°C of the battery temperature in an incubator maintained at 45°C, and then the performance test was performed. As for the charge, the battery was subjected to constant current charge (CC) until 4.2 V at the current rate of 1 C, and then charged for 2.5 hours in total with constant voltage (CV). Then, 10 minutes of the resting time was provided, and then discharge was performed until 2.5 V at the current rate of 1 C, and then 10 minutes of the resting time was provided. These were regarded as one cycle, and the charge and discharge test was carried out. The ratio of the discharge capacity after 300 cycles to the first time discharge capacity was designated as the capacity retention rate. The results are presented in the following Table 1. Incidentally, the value of the capacity retention rate presented in the Table 1 is a relative value when the value of the capacity retention rate of Comparative Example 1 is considered as 100.

[Table 1]

| | Amount of electrolyte solution L ($cm^3$) | Volume of pores of power generating element $V_1$ ($cm^3$) | $V_2/V_1$ | $L/V_2$ | Capacity retention rate (relative value) |
|---|---|---|---|---|---|
| Example 1 | 32.8 | 20.0 | 0.40 | 0.60 | 123 |
| Example 2 | 36.2 | 20.0 | 0.45 | 0.80 | 117 |
| Example 3 | 36.3 | 20.0 | 0.48 | 0.70 | 126 |
| Example 4 | 27.1 | 16.0 | 0.42 | 0.65 | 117 |
| Example 5 | 29.6 | 16.0 | 0.50 | 0.70 | 115 |
| Example 6 | 26.8 | 16.0 | 0.40 | 0.68 | 115 |
| Example 7 | 44.6 | 25.0 | 0.46 | 0.70 | 117 |
| Example 8 | 41.0 | 25.0 | 0.40 | 0.60 | 116 |
| Example 9 | 47.5 | 25.0 | 0.50 | 0.80 | 118 |
| Example 10 | 42.3 | 23.0 | 0.48 | 0.75 | 120 |
| Example 11 | 41.4 | 23.0 | 0.47 | 0.70 | 120 |
| Example 12 | 40.1 | 23.0 | 0.45 | 0.65 | 119 |
| Comparative Example 1 | 29.6 | 20.0 | 0.60 | 0.60 | 100 |
| Comparative Example 2 | 41.6 | 20.0 | 0.80 | 0.80 | 95 |
| Comparative Example 3 | 29.0 | 20.0 | 0.50 | 0.50 | 97 |

From the results presented in the Table 1, it is found that the batteries of the Examples 1 to 12 have a high capacity retention rate after long-time cycle as compared to the batteries of the Comparative Examples 1 to 3.

Reference Signs List

1      Outer casing having enclosed power generating element
2      Pressure member
3      Fixing member
4      Electrode tab
10    Lithium ion secondary battery
11    Positive electrode current collector
12    Negative electrode current collector
13    Positive electrode active material layer
15    Negative electrode active material layer
17    Separator
19    Single battery layer
21    Power generating element
25    Positive electrode current collecting plate
27    Negative electrode current collecting plate
29    Battery outer casing

31     Residual space inside battery outer casing

**Claims**

**1.** A non-aqueous electrolyte secondary battery having a power generating element enclosed inside an outer casing, wherein the power generating element comprises

a positive electrode having a positive electrode active material layer formed on a surface of a positive electrode current collector,

a negative electrode having a negative electrode active material layer containing an aqueous binder formed on a surface of a negative electrode current collector, and

a separator holding an electrolyte solution;

**characterized in that** the ratio value ($V_2/V_1$) of a volume $V_2$ to a volume $V_1$ of pores of the power generating element is 0.4 to 0.5, and the ratio value ($L/V_2$) of a volume L of the electrolyte solution injected to the outer casing to the volume $V_2$ is 0.6 to 0.8, $V_2$ being the volume of residual space inside the outer casing when the outer casing is swollen at maximum level without burst.

**2.** The non-aqueous electrolyte secondary battery according to claim 1, wherein the outer casing is a laminate film containing aluminum.

**3.** The non-aqueous electrolyte secondary battery according to claim 1 or 2, further comprising a pressure member that applies pressure to the outer casing such that group pressure applied to the power generating element is 0.07 to 0.7 kgf/cm$^2$.

**4.** The non-aqueous electrolyte secondary battery according to any one of claims 1 to 3, wherein the negative electrode active material layer has a rectangular shape and the length of the short side of the rectangular shape is 100 mm or more.

**5.** The non-aqueous electrolyte secondary battery according to any one of claims 1 to 4, wherein the ratio value of a battery area (projected area of a battery including an outer casing of the battery) to rated capacity is 5 cm$^2$/Ah or more and the rated capacity is 3 Ah or more.

**6.** The non-aqueous electrolyte secondary battery according to any one of claims 1 to 5, wherein the aspect ratio of an electrode defined as a longitudinal/transversal ratio of a rectangular positive electrode active material layer is 1 to 3.

**7.** The non-aqueous electrolyte secondary battery according to any one of claims 1 to 6, wherein the porosity of the separator is 40 to 65%.

**8.** The non-aqueous electrolyte secondary battery according to any one of claims 1 to 7, wherein the density of the negative electrode active material layer is 1.4 to 1.6 g/cm$^3$.

**9.** The non-aqueous electrolyte secondary battery according to any one of claims 1 to 8, wherein the aqueous binder comprises at least one rubber-based binder selected from the group consisting of styrene-butadiene rubber, acrylonitrile-butadiene rubber, methyl methacrylate-butadiene rubber, and methyl methacrylate rubber.

**10.** The non-aqueous electrolyte secondary battery according to claim 9, wherein the aqueous binder comprises styrene-butadiene rubber.

**Patentansprüche**

**1.** Sekundärbatterie mit nichtwässrigem Elektrolyt, die ein Stromerzeugungselement aufweist, das im Inneren einer äußeren Hülle eingeschlossen ist,

wobei das Stromerzeugungselement umfasst:

eine positive Elektrode mit einer Aktivmaterialschicht der positiven Elektrode, die auf einer Oberfläche eines Stromableiters der positiven Elektrode gebildet ist,

eine negative Elektrode mit einer Aktivmaterialschicht der negativen Elektrode, die ein wässriges Bindemittel enthält und auf einer Oberfläche eines Stromableiters der negativen Elektrode gebildet ist, und einen Separator, der eine Elektrolytlösung aufnimmt,

**dadurch gekennzeichnet, dass** der Verhältniswert ($V_2/V_1$) eines Volumens $V_2$ zu einem Volumen $V_1$ von Poren des Stromerzeugungselements 0,4 bis 0,5 beträgt und der Verhältniswert ($L/V_2$) eines Volumens L der in die äußere Hülle injizierten Elektrolytlösung zu dem Volumen $V_2$ 0,6 bis 0,8 beträgt, wobei $V_2$ das Volumen des verbleibenden Raums im Inneren der äußeren Hülle ist, wenn die äußere Hülle bis zum Höchstwert ohne Zerplatzen gequollen ist.

**2.** Sekundärbatterie mit nichtwässrigem Elektrolyt gemäß Anspruch 1, wobei die äußere Hülle eine Verbundfolie ist, die Aluminium enthält.

**3.** Sekundärbatterie mit nichtwässrigem Elektrolyt gemäß Anspruch 1 oder 2, außerdem umfassend ein Druckelement, welches auf die äußere Hülle Druck ausübt, so dass der Gruppendruck, der auf das Stromerzeugungselement ausgeübt wird, 0,07 bis 0,7 kgf/cm$^2$ beträgt.

**4.** Sekundärbatterie mit nichtwässrigem Elektrolyt gemäß einem der Ansprüche 1 bis 3, wobei die Aktivmaterialschicht der negativen Elektrode eine rechteckige Form aufweist und die Länge der kurzen Seite der rechteckigen Form 100 mm oder mehr beträgt.

**5.** Sekundärbatterie mit nichtwässrigem Elektrolyt gemäß einem der Ansprüche 1 bis 4, wobei der Verhältniswert einer Batteriefläche (projizierten Fläche einer Batterie, die eine äußere Hülle der Batterie einschließt) zu der Bemessungskapazität 5 cm$^2$/Ah oder mehr beträgt und die Bemessungskapazität 3 Ah oder mehr beträgt.

**6.** Sekundärbatterie mit nichtwässrigem Elektrolyt gemäß einem der Ansprüche 1 bis 5, wobei das Aspektverhältnis einer Elektrode, das als Längs/Quer-Verhältnis einer rechteckigen Aktivmaterialschicht der positiven Elektrode definiert ist, 1 bis 3 beträgt.

**7.** Sekundärbatterie mit nichtwässrigem Elektrolyt gemäß einem der Ansprüche 1 bis 6, wobei die Porosität des Separators 40 % bis 65 % beträgt.

**8.** Sekundärbatterie mit nichtwässrigem Elektrolyt gemäß einem der Ansprüche 1 bis 7, wobei die Dichte der Aktivmaterialschicht der negativen Elektrode 1,4 bis 1,6 g/cm$^3$ beträgt.

**9.** Sekundärbatterie mit nichtwässrigem Elektrolyt gemäß einem der Ansprüche 1 bis 8, wobei das wässrige Bindemittel wenigstens ein Bindemittel auf Kautschukbasis, ausgewählt aus der Gruppe bestehend aus Styrol-Butadien-Kautschuk, Acrylnitril-Butadien-Kautschuk, Methylmethacrylat-Butadien-Kautschuk und Methylmethacrylat-Kautschuk, umfasst.

**10.** Sekundärbatterie mit nichtwässrigem Elektrolyt gemäß Anspruch 9, wobei das wässrige Bindemittel Styrol-Butadien-Kautschuk umfasst.

**Revendications**

**1.** Batterie secondaire à electrolyte non aqueux comportant un élément de génération d'électricité inclus dans un boîtier externe,
dans laquelle l'élément de génération d'électricité comprend
une électrode positive comportant une couche de matériau actif d'électrode positive formée sur une surface d'un collecteur de courant d'électrode positive,
une électrode négative comportant une couche de matériau actif d'électrode négative contenant un liant aqueux formé sur une surface d'un collecteur de courant d'électrode négative, et un séparateur contenant une solution d'électrolyte ;
**caractérisée en ce que** la valeur de ratio ($V_2/V_1$) d'un volume $V_2$ par un volume $V_1$ de pores de l'élément de génération d'électricité est compris entre 0,4 à 0,5, et la valeur de ratio ($L/V_2$) d'un volume L de la solution d'électrolyte injectée dans le boîtier externe par le volume $V_2$ est compris entre 0,6 et 0,8, $V_2$ étant le volume d'espace résiduel à l'intérieur du boîtier externe quand le boîtier externe est gonflé au niveau maximal sans explosion.

**2.** Batterie secondaire à électrolyte non aqueux selon la revendication 1, dans laquelle le boîtier externe est un film stratifié contenant de l'aluminium.

3. Batterie secondaire à électrolyte non aqueux selon la revendication 1 ou 2, comprenant en outre un élément de pression qui applique une pression au boîtier externe telle que la pression de groupe appliquée à l'élément de génération d'électricité est comprise entre 0,07 et 0,7 kgf/cm$^2$.

4. Batterie secondaire à électrolyte non aqueux selon l'une quelconque des revendications 1 à 3, dans laquelle la couche de matériau actif d'électrode négative présente une forme rectangulaire et la longueur du côté court de la forme rectangulaire est supérieure ou égale à 100 mm.

5. Batterie secondaire à électrolyte non aqueux selon l'une quelconque des revendications 1 à 4, dans laquelle la valeur de ratio d'une surface de batterie (surface projetée d'une batterie incluant un boîtier externe de la batterie) par la capacité nominale est supérieure ou égale à 5 cm$^2$/Ah et la capacité nominale est supérieure à 3 Ah.

6. Batterie secondaire à électrolyte non aqueux selon l'une quelconque des revendications 1 à 5, dans laquelle le rapport d'aspect d'électrode défini comme un rapport longitudinal/transversal d'une couche de matériau actif d'électrode positive rectangulaire est compris entre 1 et 3.

7. Batterie secondaire à électrolyte non aqueux selon l'une quelconque des revendications 1 à 6, dans laquelle la porosité du séparateur est comprise entre 40 % et 65 %.

8. Batterie secondaire à électrolyte non aqueux selon l'une quelconque des revendications 1 à 7, dans laquelle la densité de la couche de matériau actif d'électrode négative est comprise entre 1,4 g/cm$^3$ et 1,6 g/cm$^3$.

9. Batterie secondaire à électrolyte non aqueux selon l'une quelconque des revendications 1 à 8, dans laquelle le liant aqueux comprend au moins un liant sur base d'un caoutchouc sélectionné parmi le groupe constitué par un caoutchouc styrène-butadiène, un caoutchouc acrylonitrile-butadiène, un caoutchouc méthacrylate de méthyle-butadiène, et un caoutchouc méthacrylate de méthyle.

10. Batterie secondaire à électrolyte non aqueux selon la revendication 9, dans laquelle le liant aqueux comprend un caoutchouc styrène-butadiène.

FIG. 1

FIG. 2(A)

FIG. 2(B)

**EP 2 980 909 B1**

REFERENCES CITED IN THE DESCRIPTION

**Patent documents cited in the description**

- JP 2003123765 A
- JP 2011023221 A